# EUROPÄISCHE PATENTSCHRIFT

(11) **EP 2 548 692 B1**
(45) Veröffentlichungstag und Bekanntmachung des Hinweises auf die Patenterteilung: **08.06.2016**
(21) Anmeldenummer: 11174967.7
(22) Anmeldetag: 22.07.2011
(51) Int. Cl.: B23K 26/08, B23K 26/38, B23K 37/00, B23K 37/04, B23Q 1/76

(54) **Entladevorrichtung für eine Bearbeitungsvorrichtung zur Bearbeitung von Rohren mit einer Fanglanze und zwei Fanglanzenhalterungen ; Verfahren zum schneidenden Bearbeiten eines Rohres mit einer solchen Vorrichtung**
Unloading device for a processing device for processing tubes with a catching lance and two lance supporting devices : Method of cut processing of a tube using such device
Dispositif de déchargement pour un dispositif de traitement de tuyaux avec une lance attrapeuse et deux support de lance ; Méthode d'usinage par coupage utilisant un tel dispositif

(43) Veröffentlichungstag der Anmeldung: 23.01.2013
(73) Patentinhaber: TRUMPF Werkzeugmaschinen GmbH + Co. KG, 71254 Ditzingen (DE)
(72) Erfinder: Schopf, Ralf, 71254 Ditzingen (DE); Jarsch, Florian, 71254 Ditzingen (DE)
(74) Vertreter: Kohler Schmid Möbus Patentanwälte

(56) Entgegenhaltungen:
- EP-A1- 2 253 418
- EP-B1- 1 923 166
- DE-A1-102007 018 537

## Beschreibung

Die vorliegende Erfindung betrifft eine Entladevorrichtung für eine Bearbeitungsvorrichtung zur Bearbeitung von Rohren, die eine in Rohrlängsrichtung (X-Richtung) bewegbare und in das Innere eines zu bearbeitenden Rohres einführbare Fanglanze aufweist, siehe, z.B., EP 1 923 166 A1, sowie ein Bearbeitungsverfahren unter Einsatz einer solchen Entladevorrichtung .

Unter einem Rohr wird im Rahmen dieser Anmeldung ein länglicher Körper (ein längliches Werkstück) verstanden, dessen Länge in der Regel wesentlich größer als sein Querschnitt ist und der aus einem im Wesentlichen unflexiblen Material gefertigt ist. Rohre können eine beliebige offene oder geschlossene Querschnittsform aufweisen, wobei Rund- und Rechteckrohre die gebräuchlichsten Rohre darstellen. Rohrförmige Bauteile, die aus Rohren durch Laserschneiden hergestellt werden, werden im Rahmen dieser Anmeldung als Rohrteile bezeichnet.

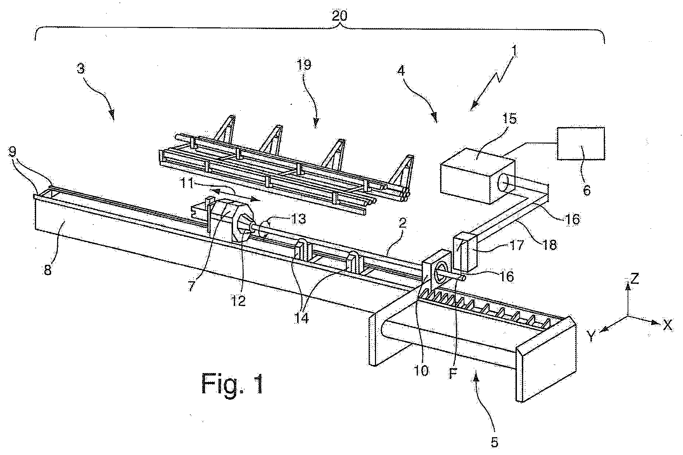

**Fig. 1** zeigt eine als "TruLaser Tube" bekannte Bearbeitungsanlage **1** zum Laserschneiden von Rohren **2**, die als Laserschneidanlage bezeichnet wird und zur Bearbeitung von Rohren mit einer beliebigen Querschnittsform ausgebildet ist. Die gezeigte Laserschneidantage 1 umfasst eine Zuführvorrichtung **3** zur seitlichen Zufuhr eines zu schneidenden Rohrs 2 zu der Laserschneidanlage 1, eine Bearbeitungsvorrichtung **4** zum Laserschneiden von Rohrteilen aus dem Rohr 2 und eine Entladevorrichtung **5** zum Entladen der geschnittenen Rohrteile aus der Laserschneidanlage 1. Alle wesentlichen Funktionen der Laserschneidanlage 1 werden mittels einer numerischen Steuerungsvorrichtung **6** gesteuert.

Die Zuführvorrichtung 3 umfasst eine als Werkstück-Bewegungseinrichtung dienende Dreh- und Vorschubeinrichtung **7** sowie ein Maschinenbett **8** mit Führungsschienen **9** und eine Durchschiebeeinrichtung **10**. Die Dreh- und Vorschubeinrichtung 7 ist motorisch angetrieben in Vorschubrichtung **11** auf den Führungsschienen 9 verfahrbar. An der einem zuzuführenden Rohr 2 zugewandten Seite weist die Dreh- und Vorschubeinrichtung 7 eine Spanneinrichtung **12** auf, die in Richtung des Doppelpfeils **13** gesteuert drehbar ist und das zugeführte Rohr 2 von außen umfasst und ortsfest klemmt. Das zugeführte Rohr 2 wird von mindestens einer in das Maschinenbett 8 integrierten Werkstückabstützung **14** abgestützt. Im Bereich der Bearbeitungsvorrichtung 4 wird das Rohr 2 durch die Durchschiebeeinrichtung 10 geführt. Die Durchschiebeeinrichtung 10 ist so ausgelegt, dass das eingespannte Rohr 2 in Vorschubrichtung 11 geführt und nicht ortsfest geklemmt ist. Das Rohr 2 ist in der Durchschiebeeinrichtung 10 um die Drehachse 13 drehbar.

Die Bearbeitungsvorrichtung 4 umfasst eine Laserstrahiquelfe **15** zum Erzeugen eines Laserstrahls **16**, einen Bearbeitungskopf **17** und eine Strahlführung **18**, die den Laserstrahl 16 von der Laserstrahlquelle 15 zum Bearbeitungskopf 17 führt. Der Laserstrahl 16 tritt aus dem Bearbeitungskopf 17 aus und wird an einer Bearbeitungsstelle **F** auf die Außenumfangsfläche des eingespannten Rohrs 2 fokussiert. Auf der dem Maschinenbett 8 abgewandten Seite der Durchschiebeeinrichtung 10 ist die Entladevorrichtung 5 vorgesehen, die die aus dem Rohr 2 geschnittenen Rohrteile sowie das Restrohr aus der Laserschneidanlage 1 abführt.

Um die Produktivität der Laserschneidanlage 1 zu erhöhen, weist die in Fig. 1 gezeigte Laserschneidanlage 1 eine Beladevorrichtung **19** als Automatisierungskomponente auf, mit der ein Rohr 2 automatisch in eine Übergabeposition befördert und an die Zuführvorrichtung 3 der Laserschneidaniage 1 übergeben wird. Die maschinelle Anordnung aus Laserschneidanlage 1 und der Beladevorrichtung 19 wird als Fertigungszelle **20** bezeichnet.

Wenn das über die Beladevorrichtung 19 zugeführte Rohr 2 in der Übergabeposition angeordnet ist, befindet sich die Dreh- und Vorschubeinrichtung 7 zunächst in einer bearbeitungskopffernen Ausgangsstellung. Zur Rohrbearbeitung verfährt die Dreh- und Vorschubeinrichtung 7 aus ihrer Position mit geöffneter Spanneinrichtung 12 so weit in Richtung auf das zugeführte Rohr 2 zu, bis das dem Bearbeitungskopf 17 abgewandte Ende des Rohrs 2 innerhalb der Spanneinrichtung 12 zu liegen kommt. Die Spanneinrichtung 12 wird geschlossen und dadurch das Rohr 2 an der Dreh- und Vorschubeinrichtung 7 ortsfest geklemmt. Die Dreh- und Vorschubeinrichtung 7 und das Rohr 2 bewegen sich gemeinsam in Richtung auf den Bearbeitungskopf 17. Dabei läuft das Rohr 2 mit seinem dem Bearbeitungskopf 17 zugewandten Ende zunächst in die Durchschiebeeinrichtung 10 ein und wird in Vorschubrichtung 11 durch die Durchschiebeeinrichtung 10 hindurch bewegt, wobei das Rohr 2 in der Durchschiebeeinrichtung 10 um die Drehachse 13 drehbar ist. Das Rohr 2 wird durch die Verfahrbewegung der Dreh- und Vorschubeinrichtung 7 in Vorschubrichtung 11 gegenüber dem Bearbeitungskopf 17 in die gewünschte Bearbeitungsposition zugestellt.

Aus der EP1 923 166 B1 ist eine solche Bearbeitungsanlage zum Laserschneiden von Rohren bekannt, die an der Entladevorrichtung eine Fanglanze und einen

Abstreifer aufweist, um Rohre spritzerfrei bearbeiten zu können. Die Fanglanze kann in das Innere des zu bearbeitenden Rohres eingeführt werden. Fertig geschnittene Rohrteile werden auf der Fanglanze abgelegt und können nach der Bearbeitung des Rohrs durch den Abstreifer von der Fanglanze abgestreift und entladen werden. Die Fanglanze und der Abstreifer sind in Rohrlängsrichtung bewegbar.

Aus der DE 102 49 106 A1 ist es bekannt, in einer Rohrschneidmaschine einen gesteuert verfahrbaren Wagen anzuordnen, der verschiedene Hilfseinrichtungen (z.B. eine Hohllanze) tragen kann, um die zu bearbeitenden oder die fertig bearbeiteten Rohre zu stützen, zu führen oder auszuwerfen. Der Wagen weist eine horizontale Trägerplatte zur Lagerung der Hilfseinrichtung auf, welche durch Servoantriebe in vertikaler Richtung gesteuert verschiebbar ist.

### Aufgabe der Erfindung

Es ist die Aufgabe der vorliegenden Erfindung, eine Entladevorrichtung mit Fanglanze für eine Rohrbearbeitungsmaschine so zu gestalten, dass Kratzer auf der Innenseite des zu bearbeitenden Rohres bei der Bearbeitung sowie beim Ein- und Ausführen der Fanglanze vermieden werden.

### Gegenstand der Erfindung

Eine Entladevorrichtung gemäß den Erfindung ist im Anspruch 1 definiert.

Bei einer solchen Entladevorrichtung wird, gemäß der Erfindung, die Fanglanze (engl. "Catcher") nicht nur in der Höhe verändert, um sie an die obere Rohrinnenseite anzustellen, sondern sie kann auch in einem Winkel zur X-Achse schräg nach oben eingestellt werden. Dies ermöglicht vor allem beim Einsatz einer langen, dünnen Lanze eine kratzerfreie Bearbeitung des Rohrs, da eine Durchbiegung der Lanze aufgrund ihres Eigengewichts, die beim Einführen der Lanze in das zu bearbeitende Rohr zu Kollisionen oder zum Schleifen der Lanze auf der Rohrinnenseite führen kann, kompensierbar ist. Die Fanglanzenhalterungen sind typischer Weise in Rohrlängsrichtung (X-Richtung) verfahrbar gelagert.

Bevorzugt sind die Fanglanzenhalterungen auf zwei unabhängig voneinander in Rohrlängsrichtung verfahrbaren Fanglanzenschlitten angebracht. Auf diese Weise kann der Stützabstand der Fanglanzenhalterungen gezielt variiert und in Abhängigkeit von der Länge und dem Gewicht der Lanze sowie vom Durchmesser und Gewicht des zu bearbeitenden Rohrs eingestellt werden: Bei langen Lanzen und schweren Rohrteilen kann der Stützabstand vergrößert werden, um eine Durchbiegung der Lanze und die Belastung der Halterungen zu verringern.

Bei einer weiteren Ausführungsform ist die Fanglanze an den Fanglanzenhalterungen in Rohrlängsrichtung verschiebbar gelagert, um eine Ausweichbewegung ausführen zu können, falls die auf die Fanglanze (in positiver oder negativer X-Richtung) wirkenden Kräfte zu groß werden. Die Verschiebung kann gegen die Wirkung einer Federkraft erfolgen, wobei die Belastung, bei der die Ausweichbewegung ausgelöst wird, über einen Kraftbegrenzer eingestellt werden kann. Bei der Fanglanze ist eine Ausgleichsbewegung sowohl in Vorschubrichtung des Rohres (in positiver X-Richtung) als auch entgegen der Vorschubrichtung (in negativer X-Richtung) günstig, da Verklemmungen sowohl beim Einfahren als auch bei Zurückziehen der Lanze aus dem Rohr auftreten können. Das Auftreten der Ausgleichsbewegung kann mittels eines Näherungsschalters detektiert werden, um eine weitere Bewegung der Lanze in Rohrlängsrichtung zu stoppen.

In einer Weiterbildung der Erfindung weist die Entladevorrichtung zusätzlich einen in Rohrlängsrichtung (X-Richtung) verfahrbaren Ablageschlitten mit einer Ablagefläche zur Ablage und zum Stützen eines Rohres während und/oder nach der Bearbeitung auf. Die Ablagefläche des Ablageschlittens kann nicht nur in Rohrlängsrichtung, sondern in mindestens einer weiteren Richtung (gesteuert) verfahren werden. Die Bewegung in der weiteren Richtung erfolgt dabei entweder durch Verfahren des Ablageschlittens als Ganzes oder dadurch, dass die Ablagefläche relativ zum tragenden Ablageschlitten verfahren wird.

Die Ablagefläche kann während der Bearbeitung eines Rohres unterhalb des abzulegenden bzw. zu stützenden Rohres positioniert und in Z-Richtung an das Rohr angestellt werden, so dass ein abgeschnittenes Rohrtell nicht auf die Fanglanze fällt, sondern von unten durch die Ablagefläche gestützt wird. Nach dem Ende der Bearbeitung kann die Fanglanze aus dem Rohrteil herausgezogen werden, ohne dass sie das Rohrteil berührt und die Rohroberfläche verkratzt oder beschädigt. Das abgeschnittene Rohrteil kann direkt von der Anlagefläche entnommen oder mit dem Ablageschlitten an eine andere Position in Rohrlängsrichtung verfahren und dort entladen werden.

Falls die Ablagefläche zusätzlich in mindestens einer anderen Richtung als der Rohrlängsrichtung verfahrbar ist, ist es außerdem möglich, den bzw. die Fanglanzenschlitten direkt an der Bearbeitungsstelle zu positionieren, beispielsweise wenn dünne Rohre bearbeitet und auf einer dünnen, kurzen Fanglanze aufgefangen werden sollen. In einer Ausführungsform weist der Ablageschlitten dazu einen Ausleger zum Verfahren der Ablagefläche des Ablageschlittens quer zur Rohrlängsrichtung bzw. zur Maschinenachse auf. Die Ablagefläche kann in diesem Fall von der Maschinenlängsachse weg verfahren werden, wenn der oder die Fanglanzenschlitten, welche die Fanglanze tragen, neben der Bearbeitungsstelle positioniert werden sollen, sodass Kollisionen auf besonders einfache Weise verhindert werden können.

Bei einer weiteren Ausführungsform ist die Ablagefläche des Ablageschlittens höhenverstellbar. In diesem Fall können der bzw. die Fanglanzenschlitten unter der Ablagefläche hindurch bewegt werden, oder umgekehrt. Auch kann die Höhenverstellung der Ablagefläche, welche z.B. durch die Anbringung der Ablagefläche an einem gesteuert in der Höhe verstellbaren Schlitten realisiert werden kann, dazu verwendet werden, um die Ablagefläche an den Hüllkreis des Rohrs anzustellen, welches von der Ablagefläche unterstützt werden soll.

Die Ablagefläche kann hierbei insbesondere prismatisch ausgebildet sein, d.h. von einer den Scheitel der Ablagefläche bildenden, sich in Rohrlängsrichtung erstreckenden Kante ausgehend quer zur Rohrlängsrichtung zu beiden Seiten hin ansteigen, sodass ein seitliches Wegrollen oder Wegrutschen von aufliegenden Rohrteilen verhindert wird.

In einer weiteren Ausführungsform ist die Ablagefläche des Ablageschlittens zwischen einer ersten, horizontalen Stellung zur Ablage des Rohres und einer zweiten, geneigten Stellung zum Ausschleusen des Rohres verschwenkbar. Zur Verschwenkung zwischen den beiden Stellungen kann eine Verschwenkeinrichtung z.B. in Form eines Hydraulik- oder Pneumatik-Zylinders dienen, dessen Kolben an einem freien Ende der Ablagefläche angreift. Durch die Schwenkbewegung der Ablagefläche können aufliegende Rohrteile besonders einfach entladen werden.

In einer Weiterbildung der Erfindung weist die Entladevorrichtung einen bevorzugt in Rohrlängsrichtung bewegbaren Abstreifer auf. Der Abstreifer weist in einer Weiterbildung ein Stützelement, insbesondere eine Stützrolle, zum Stützen der Fanglanze auf, wobei der Abstreifer und/oder das Stützelement an dem Abstreifer in Höhenrichtung bewegbar gelagert ist/sind.

Bei einer solchen Entladevorrichtung kann das Stützelement in der Höhe an die Fanglanze angestellt und somit als Stützstelle für die Fanglanze eingesetzt werden. Dies verhindert eine Durchbiegung der Lanze aufgrund ihres Eigengewichts oder aufgrund des Gewichts von aufgefädelten Rohrabschnitten und führt so zu einer verbesserten Steifigkeit der Anordnung und zur Verringerung von Vibrationen. Auf diese Weise wird eine erhöhte Genauigkeit in der Bearbeitung erreicht und die Entstehung von Kratzern auf der Rohrinnenseite durch Kontakt zwischen Lanze und Rohr kann vermieden werden. Zur Unterstützung der Fanglanze kann das Stützelement an dem Abstreifer in Höhenrichtung bewegbar gelagert sein. Günstig ist es, wenn der Abstreifer selbst in Höhenrichtung bewegbar gelagert ist, so dass bei der Bewegung des Abstreifers in Höhenrichtung das Stützelement in Höhenrichtung mit bewegt wird.

In einer vorteilhaften Ausführungsform ist das Stützelement als Stützrolle ausgebildet, die zum Stützen der Fanglanze dient. Beim Bewegen der Fanglanze relativ zum Abstreifer rollt die Fanglanze in diesem Fall mit nur geringer Reibung auf der Stützrolle ab, so dass weder der Abstreifer noch die Fanglanze beschädigt werden.

In einer Weiterbildung der Erfindung weist die Entladevorrichtung eine geneigte Entladetläche auf, welche sich quer zur Rohrlängsrichtung an die Ablagefläche anschließt. Das obere Ende der geneigten Entladefläche ist hierbei auf einer Höhe angeordnet, weiche mit der Höhe des unteren Endes der Ablagefläche in der geneigten Stellung übereinstimmt, um Rohre bzw. Rohrteile in kontrollierter Weise in Sammelbehälter oder Transporteinrichtungen zu übergeben. Durch die (stationäre) Entladefiäche, die sich über den gesamten Verfahrweg des Ablageschlittens bzw. der Fanglanzenschlitten in Rohrlängsrichtung erstreckt, wird verhindert, dass die Ablagefläche beim Verfahren in Rohrlängsrichtung mit schlecht positionierten Sammelbehältern kollidiert und ggf. dort verhakt.

Der bzw. die Fanglanzenschlitten, der Abstreiferschlitten und der Ablageschlitten können an Führungsschienen eines sich in Rohrlängsrichtung erstreckenden (Längs-)Trägers angebracht sein. Die Führungsschienen ermöglichen eine besonders einfache und damit kostengünstige Führung. Mit Hilfe von steuerbaren Antrieben können die Schlitten entlang der Führungsschienen unabhängig voneinander gesteuert bewegt werden und in einer gewünschten Position entlang des Trägers zugestellt werden. Es versteht sich, dass solche Führungsschienen auch direkt auf dem Boden der Maschinenhalle angebracht werden können, so dass die Schlitten direkt auf dem Boden verfahrbar sind. Eine Ausweichbewegung des Ablageschlittens kann in diesem Fall z.B. an einer Verzweigung einer der Führungsschienen realisiert werden, an welcher der Ablageschlittens entlang eines abzweigenden Führungsschienenabschnitts, der in einer von der Rohrlängsrichtung abweichenden Richtung verläuft, bewegt werden kann.

Ein weiterer Aspekt der Erfindung betrifft ein Verfahren zum schneidenden Bearbeiten eines Rohres mit einer Laser-Bearbeitungsvorrichtung, der eine Entladevorrichtung wie oben beschrieben zugeordnet ist, umfassend die Schritte: Einführen der Fanglanze in das Innere eines zu schneidenden Rohrs, bis eine Auffangöffnung der Fanglanze an einer Bearbeitungsstelle eines Laserstrahls positioniert ist, Trennen mindestens eines Rohrabschnitts von dem Rohr mit Hilfe des Laserstrahls, sowie Zurückziehen der Fanglanze aus dem Rohrabschnitt, wobei die Fangzange beim Einführen in das zu schneidende Rohr und/oder beim Ausführen aus dem mindestens einen Rohrabschnitt in Höhenrichtung (Z-Richtung) in einem Winkel zur Rohrlängsachse (X-Achse) ausgerichtet wird.

Bei dem erfindungsgemäßen Verfahren wird die Durchbiegung einer langen, dünnen Lanze kompensiert. Kollisionen zwischen der Lanze und dem Rohrende sowie das Schleifen der Lanze auf der Rohrinnenseite können verhindert werden. Das Ausrichten der Fanglanze unter einem Winkel zur Rohrlängsachse kann hierbei erfolgen, indem die Fanglanzenhalterungen, an denen die Fanglanze gelagert ist, an unterschiedlichen Positionen in Höhenrichtung zugestellt werden.

Vorzugsweise wird die Fanglanze während der Bearbeitung des Rohrs und während des Abstreifens der geschnittenen Rohrteile vom Stützelement des Abstreifers gestützt, so dass sie sich weniger stark oder gar nicht durchbiegen kann und Vibrationen vermindert werden.

Alternativ oder ergänzend wird das abzutrennende oder abgetrennte Rohrteil während der Bearbeitung und/oder beim Ein- oder Ausführen der Fanglanze von der Ablagefläche des Ablageschlittens gestützt. Auf diese Weise kann ein Kontakt zwischen der Fanglanze und der Rohrinnenfläche vollständig vermieden werden, da die Lanze nicht zum Auffangen der geschnittenen Teile, sondern nur zum Abführen von Metallspritzern dient. Die Lanze wird in der Rohrmitte ein- bzw. ausgeführt und die geschnittenen Rohrteile bleiben auf der Ablagefläche liegen. Kratzer auf der Rohrinnenseite können daher vermieden werden.

Vorzugsweise kann die Fanglanze vor oder nach dem Trennen des mindestens einen Rohrabschnitts in der Höhe (in Zurrichtung) verfahren werden, um den Abstand zur Schnittkante während des Schneidprozesses zu minimieren.

Weitere Vorteile der Erfindung ergeben sich aus der Beschreibung und der Zeichnung. Ebenso können die vorstehend genannten und die noch weiter aufgeführten Merkmale je für sich oder zu mehreren in beliebigen Kombinationen Verwendung finden. Die gezeigten und beschriebenen Ausführungsformen sind nicht als abschließende Aufzählung zu verstehen, sondern haben vielmehr beispielhaften Charakter für die Schilderung der Erfindung.

Es zeigen:
- Fig. 1: eine schematische Darstellung einer konventionellen Bearbeitungsanlage zum Laserschneiden von Rohren,
- Fig. 2: eine schematische Darstellung einer Entladevorrichtung mit einem Ablageschlitten, einem Abstreiferschlitten sowie einer auf zwei Fanglanzenschlitten befestigten Fanglanze,
- Fig. 3: eine schematische Detaildarstellung des Abstreiferschlittens sowie der auf zwei Fanglanzenschlitten befestigten Fanglanze gemäß Fig. 2,
- Fig. 4: eine schematische Detaildarstellung des Abstreiferschlittens gemäß Fig. 2,
- Fig. 5: eine Seitenansicht der Entladevorrichtung mit der Fanglanze in Ausgangs-bzw. Entladeposition,
- Fig. 6: eine Seitenansicht der Entladevorrichtung mit der Fanglanze in einer Einfuhrposition in das zu bearbeitende Rohr, und
- Fig. 7: eine Seitenansicht der Entladevorrichtung mit der Fanglanze in einer Arbeitsposition.

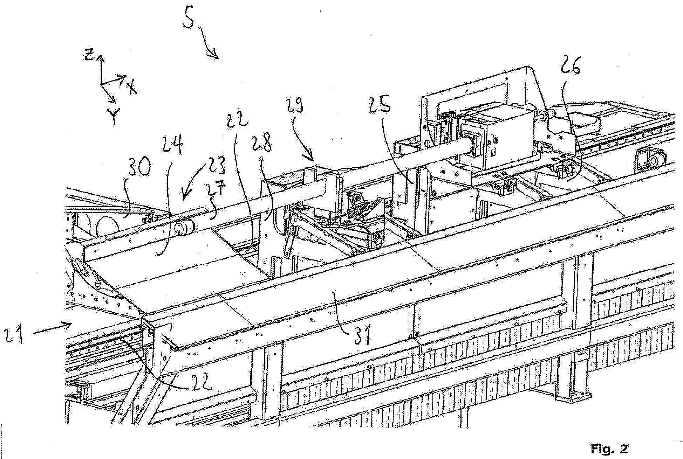

**Fig. 2** zeigt schematisch eine Entladevorrichtung 5, die an Stelle der in Fig. 1 gezeigten Entladevorrichtung 5 in der Laserschneidanlage 1 von Fig. 1 Verwendung findet. Die Entladevorrichtung 5 weist einen (Längs-)Träger **21** auf, welcher sich In Rohrlängsrichtung (X-Richtung eines XYZ-Koordinatensystems) an das Maschinenbett 8 (vgl. Fig. 1) anschließt. An dem Träger 21 sind in Rohrlängsrichtung X verlaufende Führungsschienen **22** angebracht.

Die Entladevorrichtung 5 weist einen Ablageschlitten **23** mit einer Ablagefläche **24,** eine an zwei Fanglanzenschlitten **25, 26** einseitig gelagerte Fanglanze **27** gemäß der Erfindung, sowie einen auf einem Abstreiferschlitten **28** angeordneten Abstreifer **29** auf.

An einer (in Fig. 2 nicht gezeigten) Führungsschiene, welche an der dem (in Fig. 2 nicht gezeigten) Rohr abgewandten Seite des Querträgers 21 angebracht ist, ist der Ablageschlitten 23 in Rohrlängsrichtung X geführt. Der Ablageschlitten 23 ist mit einem (nicht gezeigten) Antrieb mittels der in Fig. 1 gezeigten Steuerungsvorrichtung 6 ansteuerbar und gesteuert verschiebbar. Die Ablagefläche 24 des Ablageschlittens 23 ist im vorliegenden Beispiel als prismatisch geformter Ablagetisch ausgebildet, der über einen Ausleger **30** in einer Richtung (Y-Richtung) quer zur Rohrlängsrichtung X über die Oberseite des Trägers 21 hinweg angestellt und zurückgezogen werden kann, so dass die Ablagefläche 24 nicht mehr in den Bereich der dem Rohr zugewandten Seite des Trägers 21 hinein ragt. Der Querausleger 30 ist an einem (nicht gezeigten) Z-Schlitten des Ablageschlittens 23 angebracht, welcher mit einem (nicht gezeigten) Antrieb verfahrbar ist, so dass die Ablagefläche 24 des Ablageschlittens 23 programmgesteuert (mittels der Steuerungsvorrichtung 6) in der Höhe (Z-Richtung) verfahren und so an den Durchmesser bzw. Hüllkreis der bearbeiteten bzw. zu bearbeitenden Rohre angestellt werden kann.

Die Ablagefläche 24 des in Fig. 2 gezeigten Ablageschlittens 23 ist zwischen einer ersten und einer zweiten Winkelstellung verschwenkbar. In der ersten, waagrechten Stellung (in Fig. 2 nicht gezeigt) werden Rohrteile ohne Abrollen oder Abrutschen auf der Ablagefläche 24 abgelegt. Hierbei wird beim Abtrennen von Rohrteilen vom unbearbeiteten Rohr der Ablageschlitten 23 unter dem jeweils abzulegenden Rohrteil positioniert. Die prismatische, zu den Seiten hin ansteigende Ablagefläche 24 verhindert das seitliche Wegrollen oder Wegrutschen von aufliegenden Rohren bzw. Rohrteilen. In der waagerechten Stellung auf der Ablagefläche 24 abgelegte Rohrteile können nachfolgend durch Verfahren des Ablageschlittens 23 in Rohrlängsrichtung X an eine andere Position entlang des Trägers 21 transportiert und dort von Hand oder durch Neigen der Ablagefläche 24 entladen werden. Auf diese Weise ist eine Sortierung von Teilen in verschiedene Behälter entlang des Maschinenbetts bzw. des Trägers 21 möglich. Zum Ausschleusen von Rohrteilen an unterschiedlichen Positionen entlang der Längsachse X der Entladevorrichtung 5 wird der Ablageschlittens 23 programmgesteuert in Rohrlängsrichtung X verfahren. Ein (nicht gezeigter) Hydraulikzylinder dient dazu, die Ablagefläche 24 aus der ersten, waagrechten Stellung in die zweite, geneigte Stellung (in Fig. 2 gezeigt) zu verschwenken und umgekehrt. Zu diesem Zweck ist ein freies Ende der Ablagefläche 24 mit einer Kolbenstange des Hydraulikzylinders bewegungsgekoppelt.

Um ein prozesssicheres Entladen der Rohrteile und eine definierte Übergabe an Sammelbehälter oder Transporteinrichtungen zu gewährleisten, ist am Maschinenbett eine schräge Entladefläche **31** angebracht, welche sich in Rohrlängsrichtung X entlang des gesamten Trägers 21 erstreckt. Ein oberes Ende der Entladefläche 31 schließt sich hierbei an ein unteres Ende der Ablagefläche 24 in ihrer geneigten Stellung an. Die Entladefläche 31 dient z.B. dazu zu verhindern, dass die bewegte Ablagefläche 24 mit schlecht positionierten Sammelbehältern verhakt. Die schräge Entladefläche 31 ist typischer Weise mit ihrem unteren Ende in ihrer Höhe (Z-Richtung) so angeordnet, dass die Rohrteile ohne zusätzliche Hebeeinrichtungen in Euro-Gitterboxen (Ausschleushöhe 900mm) ausgeschleust werden können.

Die Ablagefläche 24 des Ablageschlittens 23 kann mit Hilfe des Querauslegers 30 in eine zurückgezogene Position an der dem Rohr abgewandten Seite des Trägers 21 verbracht werden. Die Ablagefläche 24 kann somit in Y-Richtung von der Maschinentängsachse weg verfahren werden, beispielsweise wenn der Abstreiferschlitten 28 direkt im Anschluss an die Bearbeitungsposition (vgl, Fig. 1) angeordnet werden soll.

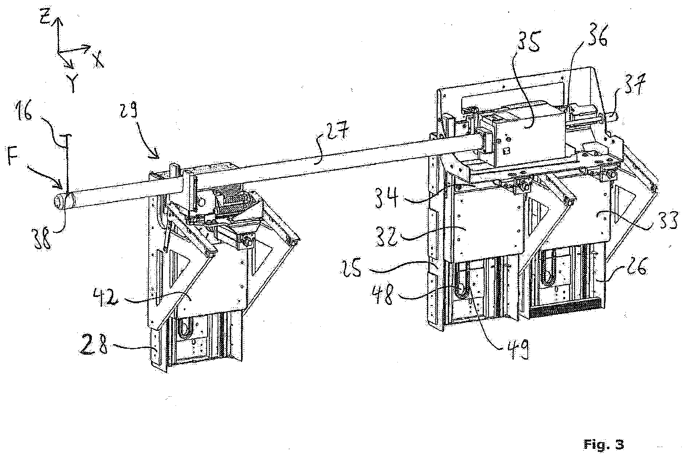

Wie in **Fig. 3** zu erkennen ist, ist die Fanglanze 27 gemäß der Erfindung, an zwei Fanglanzenhaltern 32, 33 gelagert, die an einem jeweils einem in Rohrlängsrichtung X verfahrbaren Fanglanzenschlitten 25, 26 angebracht sind. Die Fanglanze 27 ragt in Rohrlängsrichtung X auf die Dreh- und Vorschubeinrichtung 7 (vgl. Fig. 1) vor. Die Fanglanzenschlitten 25, 26 sind jeweils an eine Antriebseinheit eines motorischen Fanglanzenantriebes angekuppelt. Die Antriebseinheit weist einen elektrischen Antriebsmotor auf. Von diesem wird ein in den Abbildungen nicht näher beschriebenes Antriebszahnrad angetrieben, das seinerseits in eine Antriebszahnstange eingreift, welche an dem Quer-Träger 21 angebracht ist.

Mittels der motorischen Antriebe sind die Fanglanzenschlitten 25, 26 gekoppelt und gemeinschaftlich mit der Fanglanze 27 in Rohrlängsrichtung X verfahrbar. Bei ihrer Verfahrbewegung werden die Fanglanzenschlitten 25, 26 durch eine Längsführung geführt. Dabei handelt es sich um eine herkömmliche Linearführung, die eine an dem Träger 21 montierte Führungsschiene umfasst. Mit der Führungsschiene wirkt in üblicher Weise eine an den Fanglanzenschlitten 25, 26 vorgesehene fanglanzenseitige Längsführungseinrichtung herkömmlicher Bauart zusammen.

Wie in Fig. 3 angedeutet ist, sind die Fanglanzenhalter 32, 33 unabhängig voneinander mittels jeweils eines elektrischen Antriebsmotors, der auf der Rückseite der Fanglanzenschlitten 25, 26 angeordnet ist (in Fig. 3 nicht zu erkennen), über Ritzel **48** und Zahnriemen **49** in der Höhe verstellbar. Durch das Zustellen der Fanglanzenhalter 32, 33 in unterschiedlichen Z-Positionen kann die Fanglanze 27 in einem Winkel zur Rohrlängsachse X ausgerichtet werden, wie weiter unten näher beschrieben wird.

Wenn die Fanglanze 27 ausschließlich in waagerechter Ausrichtung eingesetzt werden und nicht in ihrem Winkel zur X-Achse variiert werden soll, können die beiden Fanglanzenhalterungen 32, 33 mechanisch (starr) miteinander gekoppelt werden, beispielsweise mit Hilfe einer Blechbrücke **34.** Auf diese Weise können die durch die Fanglanze 27 und die auf dieser aufliegenden Rohrteile erzeugten Momente als Verbund aufgenommen werden, wodurch die Stabilität und Steifigkeit der Anordnung verbessert wird. Die Fanglanze 27 ist an einer auf der Blechbrücke 34 angeordneten Lanzenkupplung **35** gelagert, die das Austauschen der Fanglanze 27 ermöglicht. Die Lanzenkupplung 35 ist an einer Führungsschiene **36** in Rohrlängsrichtung X verschiebbar gelagert, um eine Ausweichbewegung der Fanglanze 27 zu ermöglichen, falls es beim Einfahren der Fanglanze 27 in das Rohr 2 oder beim Zurückziehen der Fanglanze 27 aus dem Rohr 2 zu Kollisionen kommt. Die Kraft in X-Richtung, bei der die Ausgleichsbewegung ausgelöst wird, kann über einen mechanischen Kraftbegrenzer **37** stufenlos eingestellt werden. Die Auslösekraft kann hierbei in Abhängigkeit vom Gewicht und den Abmessungen des zu bearbeitenden Rohrs 2 bzw. in Abhängigkeit von der Größe und Länge der Fanglanze 27 angepasst werden.

Die Fanglanze 27 ist an ihrem freien Ende mit einer in Fig. 3 erkennbaren Auffangöffnung **38** versehen. In Aufbau und Funktionsweise entspricht die Fanglanze 27 beispielsweise der in EP 1454 700 A1 beschriebenen Kühl- und/oder Spüllanze. Sie kann alternativ als "Opferlanze" ohne Spülfunktion ausgeführt sein. In diesem Fall ist die Fanglanze an ihrem Ende mit einer löffelförmigen Auffangöffnung 38 ohne Spülfluidzugang ausgeführt, um Schweißspritzer aufzufangen. Bei der schneidenden Rohrbearbeitung ist die Auffangöffnung 38 im Innern des zu bearbeitenden Rohres 2 unterhalb der Bearbeitungsstelle F des Laserschneidstrahls 16 angeordnet (vgl. Fig. 1).

Im Inneren des Rohrs 2 anfallende Metallspritzer gelangen bei einer Spüllanze durch die Auffangöffnung 38 in das Innere der Lanze 27, von wo aus sie mit Hilfe eines Spülmediums abgeführt werden. Das Spülmedium wird über Schläuche in die Fanglanze 27 aufgegeben und - mit Verunreinigungen befrachtet - aus der Fanglanze 27 abgeführt. Die Zu- und Ableitungen für das Spülmedium sind im Innern einer an den Fanglanzenschlitten 25, 26 befestigten Schleppkette geschützt untergebracht.

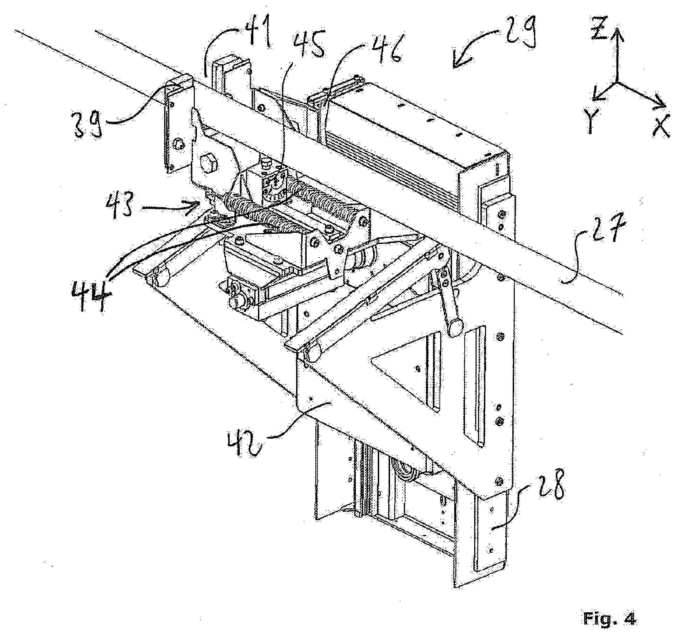

In **Fig. 4** ist der Abstreifer 29 im Detail gezeigt. Der Abstreifer 29 umfasst ein Abstreifelement **39** und ein Stützelement in Form einer Stützrolle **40.** Das Abstreifelement 39 ist plattenartig ausgebildet und weist eine U-förmige Durchtrittsöffnung **41** auf, an der es von der Fanglanze 27 durchsetzt wird. Die Stützrolle 40 ist an einer Abstreiferhalterung **42** drehbar gelagert und dient zum Stützen der Fanglanze 27 während der Laserbearbeitung und beim Entladen von Rohrabschnitten. Um die auf die Fanglanze 27 durch die Stützrolle 40 einwirkende Kraft zu begrenzen, ist die Abstreiferhalterung 42 in Z-Richtung gefedert gelagert und in der Höhe (in Z-Richtung) relativ zum Abstreiferschlitten 28 verschiebbar.

Der Abstreiferschlitten 28 mit dem Abstreifer 29 ist an eine Antriebseinheit eines (nicht gezeigten) motorischen Abstreiferantriebes angekoppelt. Die Antriebseinheit des motorischen Abstreiferantriebes umfasst einen elektrischen Antriebsmotor. Dieser treibt ein Antriebszahnrad an, das seinerseits mit einer Gegenverzahnung der Antriebszahnstange kämmt. Dementsprechend bildet die Antriebszahnstange eine dem motorischen Fanglanzenantrieb und dem motorischen Abstreiferantrieb gemeinsame tragstrukturseitige Antriebseinrichtung. Mittels des motorischen Abstreiferantriebes ist der Abstreiferschlitten 28 mit dem Abstreifer 29 relativ zum Laserschneidkopf 17 in Rohrlängsrichtung X verfahrbar. Zur Führung des Abstreiferschiittens 28 bzw. des Abstreifers 29 bei dessen Bewegung in Rohrfängsrichtung X dient eine nicht näher bezeichnete Abstreifer-Längsführung. Auch bei der Abstreifer-Längsführung handelt es sich um eine herkömmliche Linearführung.

Da es beim Abstreifen von Rohrabschnitten zu Verklemmungen zwischen der Fanglanze 27, einem jeweiligen Rohrabschnitt und den Abstreifer 29 bzw. dem Abstreifelement 39 kommen kann, ist es erforderlich, dass das Abstreifelement 39 bei einer zu hohen Belastung in Bewegungsrichtung des Rohres 2 (d.h. in positiver X-Richtung) ausweichen kann. Zu diesem Zweck ist eine Überlast-Schutzeinrichtung **43** an der Abstreiferhalterung 42 vorgesehen, die zwei Spannfedern **44** und einen (weiteren) mechanischen Kraftbegrenzer **45** umfasst. Die Ausweichlänge des Abstreiferelements 38 in Rohrlängsrichtung X ist durch den Federweg der beiden Spannfedern 42 vorgegeben und beträgt beispielsweise 120 mm. Die Kraft, ab der eine Ausweichbewegung auslöst wird, ist manuell über den mechanischen Kraftbegrenzer 45 im Bereich von ca. 100 N bis 1500 N stufenlos in Abhängigkeit vom Gewicht der Rohrteile und der Lanze 27 einstellbar. Die eingestellte Kraft wird durch einen Zeiger am Kraftbegrenzer 45 angezeigt. Ein Auslösen der Ausweichbewegung wird durch einen am Abstreiferschlitten 28 angebrachten Näherungsschalter **46** detektiert. Die zugehörige Schaltfahne ist so ausgeführt, dass sie den Näherungsschalter 46 auch bei Verfahren der Abstreiferhalterung 42 in der Höhe weiter abdeckt. Bei Auslösen des Näherungsschalters 46 wird die Verfahrbewegung der Fanglanzenschlitten 25, 26 gestoppt.

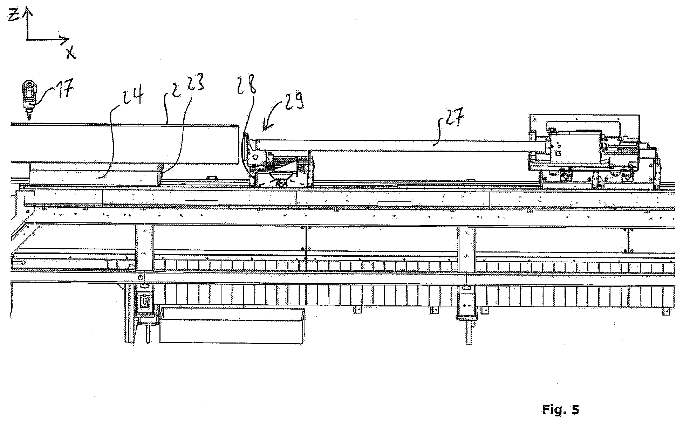

Der Ablauf einer Rohrbearbeitung ist anhand der **Figuren 5****,** **6** und **7** ersichtlich.

In **Fig. 5** ist die Entladeseite der Rohrbearbeitungsmaschine 1 in einer Seitenansicht gezeigt. In diesem Beispielsfall ist ein Rohr 2 mit verhältnismäßig großem Durchmesser zu bearbeiten. Zur besseren Unterscheidbarkeit ist die Fanglanze 27 mit deutlich geringerem Durchmesser dargestellt. Die in das Innere des Rohres 2 eintauchende Fanglanze 27 kann aber auch einen an den Rohrdurchmesser angepassten, größeren Durchmesser aufweisen. Ein großer Fanglanzendurchmesser wiederum erlaubt eine große Fanglanzenlänge, da für das Spülmedium im Inneren der Fanglanze 27 Strömungsquerschnitte bereitgestellt werden können, die einen funktionssicheren Zu- und Abtransport von Spülmedium auch über verhältnismäßig große Weglängen gestatten. Außerdem bietet ein großer Durchmesser der Fanglanze 27 die Möglichkeit, die Fanglanze mit der bei großer Länge zu fordernden erhöhten Eigensteifigkeit auszuführen.

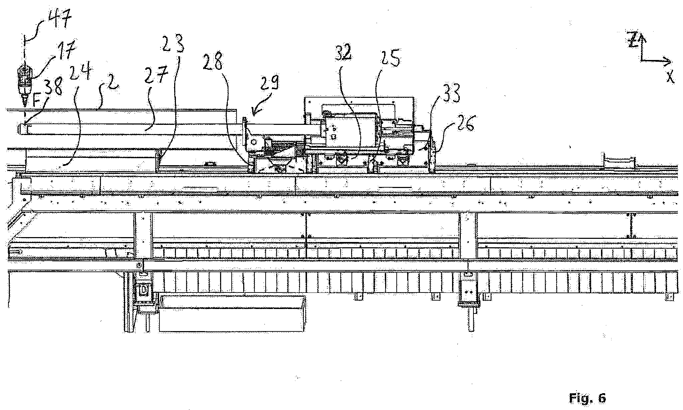

Vor Beginn der schneidenden Rohrbearbeitung werden zunächst die Fanglanze 27 und der Abstreifer 29 bei abgeschaltetem Laserschneidstrahl in Rohrlängsrichtung X positioniert, wie es in **Fig. 6** gezeigt ist. Zu diesem Zweck werden die Fanglanzenschlitten 25, 26 mittels der motorischen Antriebe numerisch gesteuert in Rohrlängsrichtung X derart angeordnet, dass die Auffangöffnung der Fanglanze 27 von der Bearbeitungsachse **47** des Laserschneidkopfes 17 durchsetzt wird. Dabei läuft die Fanglanze 27 an dem freien Ende des zu bearbeitenden Rohres 2 in das Rohrinnere ein. Das Rohrende steht anschließend mit dem gewünschten Maß über die Bearbeitungsachse 47 des Laserschneidkopfes 17 zu der Entladeseite der Laserschneidmaschine 1 hin vor.

Wenn bei großer Länge der Fanglanze 27 eine Durchbiegung aufgrund ihres Eigengewichts auftritt, kann diese durch ein Schrägstellen der Lanze 27 kompensiert werden. Dazu wird die Fanglanzenhalterung 32 des Fanglanzenschlittens 25, der näher beim Laserschneidkopf 17 angeordnet ist, relativ zu der schneidkopffernen Fanglanzenhalterung 33 nach oben verfahren. So kann die Fanglanze 27 in das Innere des Rohrs 2 mit nur geringfügig größerem Innendurchmesser eintauchen, ohne die Innenoberfläche des Rohrs 2 zu beschädigen. Es versteht sich, dass die Schrägstellung der Fanglanze 27 entlang ihres Verfahrwegs in Rohrlängsrichtung 27 ggf. verändert werden kann.

Vor dem Bearbeiten wird der Abstreiferschlitten 28 mittels des gleichfalls numerisch gesteuerten motorischen Abstreiferantriebes in Rohrlängsrichtung X in eine Position verfahren, in weicher er von der Bearbeitungsachse 47 des Laserschneidkopfs 17 in Rohrlängsrichtung X einen Abstand aufweist, der auf die Gesamtlänge des bzw. der nach der Rohrbearbeitung zu entladenden Fertigteile abgestimmt ist. Auf die Gesamtlänge der zu entladenden Fertigteile gleichfalls abgestimmt ist damit der schneidkopfseitige Überstand der Fanglanze 27 gegenüber dem Abstreifer 29.

Der Ablageschlitten 23 kann unter dem Rohr 2 angeordnet und in Z-Richtung an das Rohr 2 angestellt werden. So wird das Rohr 2 während und/oder nach der Bearbeitung durch die Ablagefläche 24 gestützt. Dies ist vorteilhaft, wenn schwere Rohre geschnitten werden sollen oder wenn kratzerfrei entladen werden soll. In der in Fig. 6 gezeigten Entladestellung ist der Ablageschlitten 23 zwischen dem Schneidkopf 17 und dem Abstreiferschlitten 28 unter dem Rohr 2 angeordnet. Wenn dünnwandige Rohre bearbeitet oder kurze Rohrteile geschnitten werden sollen, ist eine Unterstützung durch die Ablagefläche 24 nicht nötig oder sogar hinderlich. Dann kann die Ablagefläche 24 mit Hilfe des Querauslegers 30 (vgl. Fig. 2) in eine zurückgezogene Position an der dem Rohr 2 abgewandten Seite des Trägers 21 verbracht werden, so dass der Abstreiferschlitten 28 direkt im Anschluss an die Bearbeitungsposition F positioniert werden kann.

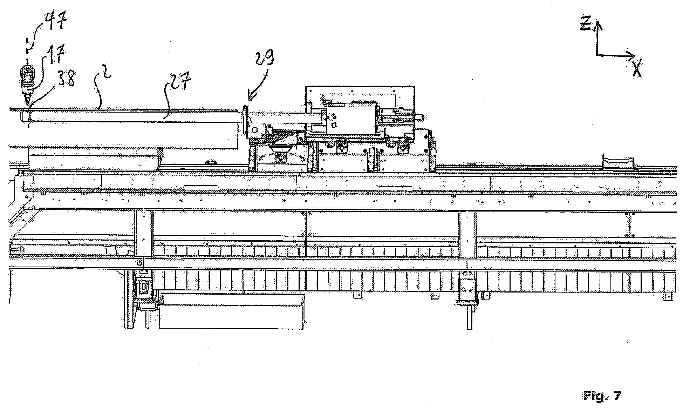

Wie **Fig. 7** zeigt, wird die Fanglanze 27 nach dem Eintauchen in das Rohr 2 durch eine Bewegung der Fanglanzenhalterungen 32, 33 in Z-Richtung angehoben und knapp (beispielsweise ca. 3 mm) unter der oberen Rohrinnenseite positioniert. Der Abstreifer 29 wird ebenfalls in Z-Richtung angehoben, so dass die Stützrolle 40 die Fanglanze 27 stützt.

Nun wird bei in Rohrlängsrichtung X ortsfester Dreh- und Vorschubeinrichtung 7 und bei eingeschaltetem Laserschneidstrahl16 das Spannfutter 12 der Dreh- und Vorschubeinrichtung 7 mit dem daran festgelegten Rohr um 360° in Rohrumfangsrichtung gedreht. Bei dieser Drehbewegung wird an dem Rohr 2 ein in Rohrumfangsrichtung durchgehender Trennschnitt erstellt. Eine Verunreinigung der Rohrinnenwand durch die bei dem Schneidvorgang gebildeten Metallspritzer wird mittels der Fanglanze 27 verhindert. Ein durch den Trennschnitt von dem Rohr 2 abgetrennter Rohrabschnitt wird entweder unter Schwerkraftwirkung selbsttätig auf der Fanglanze 27 abgelegt oder von unten durch die Ablagefläche 24 des Ablageschlittens 23 gestützt und ggf. durch gesteuertes Verfahren der Ablagefläche 24 nach unten auf der Fanglanze 27 abgelegt.

Anschließend kann das Rohr 2 bei abgeschaltetem Laserschneidstrahl 18 durch Verfahren der Dreh- und Vorschubeinrichtung 7 in Richtung auf den Laserschneidkopf 17 nachgesetzt werden. Dabei wird der auf der Fanglanze 27 aufgefädelte Rohrabschnitt durch das vorauseilende Ende des Rohres 2 in Richtung auf den Abstreifer 29 verschoben. Nach Beendigung der Nachsetzbewegung wird bei in Rohrlängsrichtung X stationärer Dreh- und Vorschubeinrichtung 7 und bei eingeschaltetem Laserschneidstrahl 16 durch Drehen des Rohres 2 um 360° ein weiterer Trennschnitt erstellt. Auch ein dabei abgetrennter Rohrabschnitt kommt selbsttätig oder durch die Ablagefläche 24 gestützt auf der Fanglanze 27 zu liegen. Der beschriebene Trennvorgang kann weitere Male wiederholt werden, so dass weitere Rohrabschnitte abgetrennt und gleichfalls auf der Fanglanze 27 aufgefädelt werden, bis der schneidkopfseitige Überstand der Fanglanze 27 gegenüber dem Abstreifer 29 durch die Rohrabschnitte weitgehend belegt ist.

Zum Entladen der Rohrabschnitte wird die Ablagefläche 24 des Ablagetisches 23 in die geneigte Entladestellung verschwenkt. Dann verfährt die Fanglanze 27 numerisch gesteuert aus ihrer Arbeitsstellung gemäß Fig. 7 in die Entladestellung gemäß Fig. 5. Dabei führt die Fanglanze 27 eine Relativbewegung zu dem Abstreifer 29 aus. Infolge dieser Relativbewegung werden die Rohrabschnitte, deren Durchmesser die Weite der Durchtrittsöffnung 41 an dem Abstreifer 29 übersteigt, mittels des Abstreifers 29 von der Fanglanze 27 abgestreift. Die Rohrabschnitte fallen unter Schwerkraftwirkung auf die (schräggestellte) Ablagefläche 24 des Ablagetisches 23 und rollen oder rutschen dann auf die geneigte Entladfläche 31, von wo aus sie in nicht im Einzelnen dargestellten Fertigteilbehältern abgelegt und schließlich aus dem Nahbereich der Laserschneidanlage 1 abgeführt werden.

Alternativ kann die Ablagefläche 24 des Ablagetisches 23 während des Ausfahrens der Fanglanze 27 in waagerechter Position eingestellt sein, In diesem Fall fallen die Rohrabschnitte auf die Ablagefläche 24 und bleiben dort liegen. Durch Verfahren des Ablageschlittens 23 entlang des Trägers 21 und anschließendem Neigen der Ablagefläche 24 können die Rohrteile an der gewünschten Position entladen werden.

Bei schweren Rohrteilen oder wenn ein Verkratzen der Rohrinnenseite beim Herausziehen der Fanglanze 27 vermieden werden soll, erfolgt das Entladen der geschnittenen Rohrteile mit Hilfe des Ablageschlittens 23. Das Rohr 2 wird in diesem Fall während des Trennschnitts von unten durch die - waagerecht gestellte - Ablagefläche 24 gestützt. Die geschnittenen Rohrteile bleiben auf der Ablagefläche 24 liegen und werden nicht auf der Fanglanze 27 abgelegt. Nach dem Ende der Bearbeitung wird die Fanglanze 27 in Z-Richtung bis zur Rohrmitte abgesenkt und aus den geschnittenen Rohrteilen gezogen, ohne die Rohrinnenflächen zu berühren. Die fertigen Rohrteile können dann mit Hilfe des Ablageschlittens 23 an beliebige Stellen entlang des Trägers 21 verbracht und durch Neigen der Ablagefläche 24 entladen werden.

## Patentansprüche

1. Entladevorrichtung (5) für eine Bearbeitungsvorrichtung (4) zur schneidenden Bearbeitung von Rohren (2), wobei die Entladevorrichtung (5) eine in Rohrlängsrichtung (X) bewegbare und in das Innere eines zu bearbeitenden Rohrs (2) einführbare Fanglanze (27) aufweist,
**dadurch gekennzeichnet,**
**dass** die Fanglanze (27) zur Ausrichtung in einem Winkel schräg nach oben zur Rohrlängsachse an zwei Fanglanzenhalterungen (32, 33) angebracht ist, die unabhängig voneinander in Höhenrichtung (Z) bewegbar sind, und dass die Fanglanzenhalterungen (32, 33) an zwei in Rohrlängsrichtung (X) verfahrbaren Fanglanzenschlitten (25, 26) angebracht sind, an denen die Fanglanze (27) einseitig gelagert ist.

2. Entladevorrichtung nach Anspruch 1, **dadurch gekennzeichnet, dass** die zwei Fanglanzenschlitten (25, 26) unabhängig voneinander in Rohrlängsrichtung (X) verfahrbar sind.

3. Entladevorrichtung nach Anspruch 1 oder 2, **dadurch gekennzeichnet, dass** die Fanglanze (27) an den Fanglanzenhalterungen (32, 33) in Rohrlängsrichtung (X) verschiebbar gelagert ist.

4. Entladevorrichtung nach einem der vorhergehenden Ansprüche, **gekennzeichnet durch** einen in einen in Rohrlängsrichtung (X) verfahrbaren Ablageschlitten (23) mit einer Ablagefläche (24) zum Stützen des Rohres (2) während und/oder nach der Bearbeitung.

5. Entladevorrichtung nach Anspruch 4, bei welcher der Ablageschlitten (23) quer zur Rohrlängsrichtung (X) verfahrbar ist oder einen Ausleger (30) zum Verfahren der Ablagefläche (24) des Ablageschlittens (23) quer zur Rohrlängsrichtung (X) aufweist.

6. Entladevorrichtung nach Anspruch 4 oder 5, bei welcher die Ablagefläche (24) des Ablageschlittens (23) höhenverstellbar ist.

7. Entladevorrichtung nach einem der Ansprüche 4 bis 6, bei welcher die Ablagefläche (24) des Ablageschlittens (23) prismatisch ist, derart, dass sie von einer den Scheitel der Ablagefläche (24) bildenden, sich in Rohrlängsrichtung (X) erstreckenden Kante ausgehend quer zur Rohrlängsrichtung (X) zu beiden Seiten hin ansteigt.

8. Entladevorrichtung nach einem der Ansprüche 4 bis 7, bei welcher die Ablagefläche (24) des Ablageschlittens (23) zwischen einer ersten Stellung zur Ablage des Rohres (2) und einer zweiten Stellung zum Ausschleusen des Rohres (2) verschwenkbar ist.

9. Entladevorrichtung nach einem der vorhergehenden Ansprüche, **gekennzeichnet durch** einen bevorzugt in Rohrlängsrichtung (X) bewegbaren Abstreifer (29), der mindestens ein Stützelement (40), insbesondere eine Stützrolle, zum Stützen der Fanglanze (27) aufweist, wobei der Abstreifer (29) oder das Stützelement (40) an dem Abstreifer (29) in Höhenrichtung (Z) bewegbar gelagert ist.

10. Entladevorrichtung nach einem der vorhergehenden Ansprüche, weiter umfassend; eine geneigte Entladefläche (31), welche sich in einer Richtung (Y) quer zur Rohrlängsrichtung (X) an die Ablagefläche (24) des Ablageschlittens (23) anschließt und sich in Rohrlängsrichtung (X) erstreckt.

11. Verfahren zum schneidenden Bearbeiten eines Rohrs (2) mit einer Laser-Bearbeitungsvorrichtung (4), der eine Entladevorrichtung (5) nach einem der Ansprüche 1 bis 10 zugeordnet ist, umfassend die Schritte:
Einführen der Fanglanze (27) in das Innere eines zu schneidenden Rohrs (2), bis eine Auffangöffnung (38) der Fanglanze (27) an einer Bearbeitungsstelle (F) eines Laserstrahls (16) positioniert ist,
Trennen mindestens eines Rohrabschnitts von dem Rohr (2) mit Hilfe des Laserstrahls (16), sowie
Zurückziehen der Fanglanze (27) aus dem Rohrabschnitt, wobei die Fanglanze (27) beim Einführen in das zu schneidende Rohr (2) und/oder beim Ausführen aus dem mindestens einen Rohrabschnitt in Höhenrichtung (Z) in einem Winkel zur Rohrlängsachse (X) ausgerichtet wird.

12. Verfahren nach Anspruch 11, weiter umfassend den Schritt: Bewegen der Ablagefläche (24) des Ablageschlittens (23) in Höhenrichtung (Z), bis das Rohr (2) von der Ablagefläche (24) gestützt wird.

13. Verfahren nach Anspruch 11 oder 12, weiter umfassend den Schritt. Bewegen des Stützelements (40) in Höhenrichtung (Z), bis die Fanglanze (27) von dem Stützelement (40) gestützt wird.

14. Verfahren nach einem der Ansprüche 11 bis 13, bei dem die Fanglanze (27) vor oder nach dem Trennen des mindestens einen Rohrabschnitts in Höhenrichtung (Z) verfahren wird.

## Claims

1. An unloading device (5) for a processing device (4) for the processing of tubes by cutting (2), wherein the unloading device (5) comprises a catching lance (27) displaceable in the longitudinal direction (X) of the tube and capable of being introduced into the interior of a tube (2) to be processed,
**characterised in that**
the catching lance (27) is mounted on two catching-lance mounts (32, 33) for alignment at an angle which is inclined upwards relative to the longitudinal axis of the tube, which are displaceable independently of one another in the height direction (Z), and that the catching-lance mounts (32, 33) are attached to two catching-lance slides (25, 26) which are displaceable in the longitudinal direction (X) of the tube, on which the catching lance (27) is borne at one end.

2. The unloading device according to claim 1,
**characterised in that**
the two catching-lance slides (25, 26) are displaceable independently of one another in the longitudinal direction (X) of the tube.

3. The unloading device according to claim 1 or 2,
**characterised in that**
the catching lance (27) is mounted on the catching-lance mounts (32, 33) in a displaceable manner in the longitudinal direction (X) of the tube.

4. The unloading device according to any one of the preceding claims, **characterised by** a support carriage (23) displaceable in the longitudinal direction (X) of the tube with a support surface (24) for the support of the tube (2) during and/or after the processing.

5. The unloading device according to claim 4, in which the support carriage (23) is displaceable transversely to the longitudinal direction (X) of the tube or comprises an extension arm (30) for the displacement of the support surface (24) of the support carriage (23) transversely to the longitudinal direction (X) of the tube.

6. The unloading device according to claim 4 or 5, in which the support surface (24) of the support carriage (23) is height-adjustable.

7. The unloading device according to any one of claims 4 to 6, in which the support surface (24) of the support carriage (23) is prismatic, in such a manner that it rises transversely towards the longitudinal direction (X) of the tube on both sides starting from an edge forming the apex of the support surface (24) extending in the longitudinal direction (X) of the tube.

8. The unloading device according to any one of claims 4 to 7, in which the support surface (24) of the support carriage (23) is pivotable between a first position for the support of the tube (2) and a second position for the unloading of the tube (2).

9. The unloading device according to any one of the preceding claims, **characterised by** a scraper (29) preferably displaceable in the longitudinal direction (X) of the tube, which comprises at least one supporting element (40), especially a supporting roller, for supporting the catching lance (27), wherein the scraper (29) or the supporting element (40) on the scraper (29) is mounted in a displaceable manner in the height direction (Z).

10. The unloading device according to any one of the preceding claims, further comprising: an inclined unloading surface (31) which adjoins the support surface (24) of the support carriage (23) in a direction (Y) transverse to the longitudinal direction (X) of the tube and extends in the longitudinal direction (X) of the tube.

11. A method for the processing of a tube (2) by cutting with a laser processing device (4), with which an unloading device (5) according to any one of claims 1 to 10 is associated, comprising the steps:
introducing the catching lance (27) into the interior of a tube (2) to be cut, until a catching opening (38) of the catching lance (27) is positioned at a processing position (F) of a laser beam (16),
separating at least one tube section from the tube (2) by means of the laser beam (16), and
withdrawing the catching lance (27) from the tube section, wherein, during the introduction into the tube (2) to be cut and/or during the withdrawal from the at least one tube section, the catching lance (27) is aligned in the height direction (Z) at an angle to the longitudinal axis (X) of the tube.

12. The method according to claim 11, further comprising the step: displacing of the support surface (24) of the support carriage (23) in the height direction (Z) until the tube (2) is supported by the support surface (24).

13. The method according to claim 11 or 12, further comprising the step:
displacement of the supporting element (40) in the height direction (Z) until the catching lance (27) is supported by the supporting element (40).

14. The method according to any one of claims 11 to 13, in which the catching lance (27) is displaced in the height direction (Z) before or after the separation of the at least one tube section.

## Revendications

1. Dispositif de déchargement (5) pour un dispositif d'usinage (4) pour l'usinage par outil coupant de tubes (2), lequel dispositif de déchargement (5) présente une lance réceptrice (27) mobile dans la direction longitudinale du tube (X) et pouvant être introduite à l'intérieur d'un tube (2) à usiner,
**caractérisé en ce**
**que** pour pouvoir être orientée à un angle incliné vers le haut par rapport à l'axe longitudinal du tube, la lance réceptrice (27) est montée sur deux supports de lance réceptrice (32, 33) qui sont mobiles indépendamment l'un de l'autre dans la direction de la hauteur (Z), et que les supports de lance réceptrice (32, 33) sont montés sur deux chariots de lance réceptrice (25, 26) déplaçables dans la direction longitudinale du tube (X), sur lesquels la lance réceptrice (27) est montée d'un côté.

2. Dispositif de déchargement selon la revendication 1, **caractérisé en ce que** les deux chariots de lance réceptrice (25, 26) sont déplaçables indépendamment l'un de l'autre dans la direction longitudinale du tube (X).

3. Dispositif de déchargement selon l'une des revendications 1 ou 2, **caractérisé en ce que** la lance réceptrice (27) est montée sur les supports de lance réceptrice (32, 33) de manière coulissante dans la direction longitudinale du tube (X).

4. Dispositif de déchargement selon l'une des revendications précédentes, **caractérisé par** un chariot de dépose (23) déplaçable dans la direction longitudinale du tube (X), qui présente une surface de dépose (24) pour supporter le tube (2) pendant et/ou après l'usinage.

5. Dispositif de déchargement selon la revendication 4, dans lequel le chariot de dépose (23) est déplaçable transversalement à la direction longitudinale du tube (X) ou présente un bras (30) pour déplacer la surface de dépose (24) du chariot de dépose (23) transversalement à la direction longitudinale du tube (X).

6. Dispositif de déchargement selon l'une des revendications 4 ou 5, dans lequel la surface de dépose (24) du chariot de dépose (23) est réglable en hauteur.

7. Dispositif de déchargement selon l'une des revendications 4 à 6, dans lequel la surface de dépose (24) du chariot de dépose (23) est prismatique, de telle sorte qu'elle s'élève des deux côtés transversalement à la direction longitudinale du tube (X) à partir d'une arête formant le sommet de la surface de dépose (24) et s'étendant dans la direction longitudinale du tube (X).

8. Dispositif de déchargement selon l'une des revendications 4 à 7, dans lequel la surface de dépose (24) du chariot de dépose (23) peut pivoter entre une première position de dépose du tube (2) et une deuxième position d'éjection du tube (2).

9. Dispositif de déchargement selon l'une des revendications précédentes, **caractérisé par** un racloir (29) de préférence mobile dans la direction longitudinale du tube (X), qui présente au moins un élément de support (40), en particulier un galet de support, pour soutenir la lance réceptrice (27), le racloir (29) ou l'élément de support (40) sur le racloir (29) étant monté mobile dans la direction de la hauteur (Z).

10. Dispositif de déchargement selon l'une des revendications précédentes, comprenant en outre : une surface de déchargement inclinée (31) qui se raccorde à la surface de dépose (24) du chariot de dépose (23) dans une direction (Y) transversale à la direction longitudinale du tube (X) et s'étend dans la direction longitudinale du tube (X).

11. Procédé pour l'usinage par outil coupant d'un tube (2) avec un dispositif d'usinage au laser (4), auquel est associé un dispositif de déchargement (5) selon l'une des revendications 1 à 10, comprenant les étapes suivantes :
introduction de la lance réceptrice (27) à l'intérieur d'un tube (2) à couper jusqu'à ce qu'une ouverture de collecte (38) de la lance réceptrice (27) soit positionnée à un point d'usinage (F) d'un faisceau laser (16),
séparation d'au moins un tronçon de tube du tube (2) à l'aide du faisceau laser (16), ainsi que
retrait de la lance réceptrice (27) du tronçon de tube,
la lance réceptrice (27) étant orientée à un angle par rapport à l'axe longitudinal du tube (X) dans la direction de la hauteur (Z) lors de l'introduction dans le tube (2) à couper et/ou lors du retrait dudit au moins un tronçon de tube.

12. Procédé selon la revendication 11, comprenant en outre l'étape suivante:
déplacement de la surface de dépose (24) du chariot de dépose (23) dans la direction de la hauteur (Z) jusqu'à ce que le tube (2) soit soutenu par la surface de dépose (24).

13. Procédé selon l'une des revendications 11 ou 12, comprenant en outre l'étape suivante : déplacement de l'élément de support (40) dans la direction de la hauteur (Z) jusqu'à ce que la lance réceptrice (27) soit soutenue par l'élément de support (40).

14. Procédé selon l'une des revendications 11 à 13, selon lequel la lance réceptrice (27) est déplacée dans la direction de la hauteur (Z) avant ou après la séparation dudit au moins un tronçon de tube.
